# EUROPEAN PATENT APPLICATION

(11) **EP 3 056 821 A1**
(43) Date of publication of application: **17.08.2016**
(21) Application number: 15154427.7
(22) Date of filing: 10.02.2015
(51) Int. Cl.: F24C 7/08, A47J 37/06, F24C 15/32

(54) **Domestic food oven and method for heating food in a domestic food oven**

(71) Applicant: Electrolux Appliances Aktiebolag, 105 45 Stockholm (SE)
(72) Inventor: SCHIRMER, Stefan, 91541 Rothenburg ob der Tauber (DE); JUNKERSFELD, Markus, 91541 Rothenburg ob der Tauber (DE)
(74) Representative: Röder, Richard

(57) **Abstract**

The invention provides a power-saving Domestic food oven (2000) and method (3000) for heating food in a domestic food oven that heats up the oven at 100% capacity under thermostatic control and later adopts a power control that corresponds to a load inside of the oven. The load may be determined by means of a scale and used to determine the control power value for the power control unit (1200) or a temperature-over-time behavior in the form of a linear slope may be determined that will be compared to the behavior of an empty oven in order to determine a load inside the oven and on the basis of the load inquire a table of results of previous experiments to determine a corresponding power level. Also mathematical functions describing the non-linear behavior of the oven (2000) in the presence of food may be used in order to determine the proper power.

## Description

In recent times, the awareness has increased that resources are limited. Increasing oil and electricity prices motivate the consumer to buy energy-saving devices. Concerning household appliances, such as kitchen appliances, energy can be predominantly saved in such devices where electrical heating is used. Usually, electrical heating accounts for more energy consumption than powering engines and pumps. To stay market-competitive, it becomes more and more important for the manufacturers of kitchen appliances to offer household appliances that consume less energy. Energy can thus be saved with appliances, such as kitchen ovens that per se consume high power, e.g. a kitchen oven with various heating elements can easily account for 3 kW.

Document US 2,404,139, "domestic appliance" relates to a domestic appliance and more particularly to heating arrangements in two-unit electric ovens and controls therefore.
It is an object there to eliminate the necessity for the manual change from the preheat to the bake position and further to change the heating arrangement from preheat to bake.
In an initial step, preheating is switched on by twisting the adjustment knob in a preheat position which effects an electromagnet closing the circuit to the second heating element. This electromagnet is under the control of a thermal switch that releases it once the preheat temperature is detected.

The invention is based on the problem to improve the power efficiency of a kitchen oven.

This problem is solved by the invention by a domestic food oven according to claim 1 and a method for heating food in a domestic food oven according to claim 10.

Further developments of the invention are given in the dependent claims.

Advantageously, the domestic food oven according the embodiment of the present invention is based on a convection heating arrangement applying two circular heaters, one of which is beneficially switched on during a heat-up phase that serves to quickly reach a preset temperature. Therewith, convection heating arrangements that are known for their efficiency due to the use of a fan can be further improved, because the heat-up time is shorter and thus the energy efficiency increases even more. Further, the power fed to the circular heater during operation of the domestic food oven is controlled in dependency of the food mass. Thus, the energy efficiency of a domestic food oven with a convection heating arrangement is even more improved.

Favorably, according to a further development of an embodiment of the domestic food oven of the present invention, the thermal cut-out switch is designed in a manner to possess a temperature operating range ensuring that it reconnects the second circular heater once both circular heaters are disconnected from power, and e.g. the domestic food oven has cooled down. In this manner it is securely safeguarded that the first circular heater is only operated during a preheat phase that is finished once a preset temperature has been reached.

Advantageously, according to a further development of an embodiment of the domestic food oven of the present invention, the power supplied to the circular heater can be controlled by controlling and varying the supply voltage of the first circular heater. Thus, many solutions for controlling a supply voltage can be used that are available on the market and which are sufficiently reliable to be used in a home appliance.

Favorably, according to a further development of an embodiment of the domestic food oven of the present invention, the power supplied to the first circular heater can be controlled by controlling the current flowing through the first circular heater. In this manner, flexibility is achieved in power control and solutions can be used that are proven to be fail-safe and reliable as required for the use in a home appliance.

Advantageously, according to a further development of an embodiment of the domestic food oven according to the present invention, the mass determination unit comprises a user-operable mass input. In this manner, in a reliable fashion, a mass of the food to be heated inside of the domestic food oven can be determined. Such a solution is technically simple, safe, and reliable and requires no large technical effort as keys that are already available for control functions on the domestic food oven can be used to input the mass of the food to be heated in order to save as much energy as possible by controlling the power supplied to the first circular heater.

Favorably, according to a further development of an embodiment of the domestic food oven according to the present invention, a food mass determination unit comprises a scale, as in this manner the food mass can be conveniently determined by e.g. a spring-loaded scale that is technically simple to manufacture and reliable, while at the same time by the use of e.g. a variable resistor the displacement of the scale can be used to automatically communicate the mass to the power control unit.

Beneficially, according to a further development of an embodiment of the domestic food oven according to the present invention, the thermal inertia of the food can be automatically determined by way of comparing the heat-up behavior of an empty oven and the heat-up behavior of an oven under load with a certain food mass, preparing a table for these dependencies and looking up values in this table that had been pre-stored when the food is heated and the actual temperature-over-time behavior is determined in order to determine the actual food mass.

Advantageously, according to a further development of an embodiment of the domestic food oven according to the present invention, the food mass determination unit is adapted to automatically provide a control power value in dependency of the food mass/thermal inertia of the food, as in this manner no additional functional components are required to provide such a value.

Advantageously, the food mass determination unit has all the required information to determine the control power value, e.g. when the food mass to be heated is determined automatically and the corresponding control value for the determined food mass can be pre-stored that is sufficient to maintain the temperature of this food mass at a certain level.

Advantageously, according to a further development of an embodiment of the domestic food oven according to the present invention, the food mass determination unit is adapted to automatically output a power control value corresponding to the food mass. In this manner, no further components are required to determine a dependency of the food mass and the control power value, and thus no additional components are required to safeguard that the proper temperature is maintained for this particular food mass inside of the domestic food oven.

Advantageously, according to the embodiment of the method for heating food in a domestic oven according to the present invention, first a preset temperature is established with two circular heaters, and then one of the circular heaters is switched off at the preset temperature, whereas the second one is used to maintain the temperature required for a food mass to be heated inside of the oven, while additionally the power of this circular heater is controlled in dependency of the food mass to be heated. In this manner, maximum efficiency can be achieved by first switching off one heater and secondly operating the second heater that is used e.g. for baking or cooking only to an extent that is required to keep the food to be processed at a certain temperature.

Beneficially, according to a further development of an embodiment of the method for heating food according to the present invention, the power to the first circular heater is provided corresponding to the mass of the food to be heated. In this manner, during the processing of the food, a maximum of energy can be saved by limiting the power to the amount that is required for heating this exact mass of food.

Beneficially, according to a further development of the method for heating food according to the present invention, the food is heated inside of a fan oven that per se allows a good constant temperature throughout the entire oven cavity and per se improves the temperature behavior of such an oven while as such under power control it is established that the food on every level is exposed to the same temperature and thus a maximum of energy-saving can be achieved.

Subsequently, the invention will further be explained on the basis of embodiments and examples shown in drawings, wherein:
- Fig. 1: shows a basic configuration of an embodiment of a domestic food oven;
- Fig. 2: shows an embodiment of an oven;
- Fig. 3: shows an embodiment of a method for the electrical heating of food;

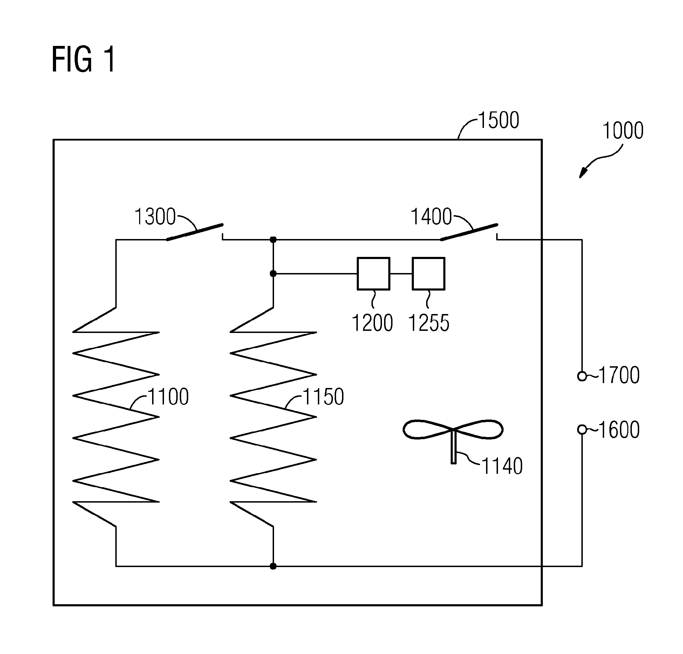

As Fig. 1 shows, a schematic representation of a preferred embodiment of a domestic food oven 1000 by way of a basic representation has an oven cavity 1500 that may contain e.g. all the functional parts that are required to provide, distribute and measure heat inside of the oven. Such as there are a first circular heater 1150 and a second circular heater 1100. Also a fan 1140 is shown that is preferably mounted to a wall of the oven cavity 1500. Further, a power control unit 1200 is shown and a food mass determination unit 1255. The food mass determination unit and the power control unit work on the first circular heater 1150. Further, a thermostat 1400 is shown and a thermal cut-out switch 1300. Further, a power supply 1700 and 1600 is depicted. During the heat-up phase of the domestic food oven 1000 that normally starts from room temperature as well the thermostat 1400 as the thermal cut-out switch 1300 are closed. Thus, the first circular heater 1150 and the second circular heater 1100 are both connected to power 1700, 1600.

The thermal cut-out switch may be implemented by way of a bimetal. The bimetal should have certain thermal properties adapted to the purpose of the present invention. Preferably, the heat-up temperature to be maintained may be e.g. a fixed value set as 180°C or e.g. as 160°C.

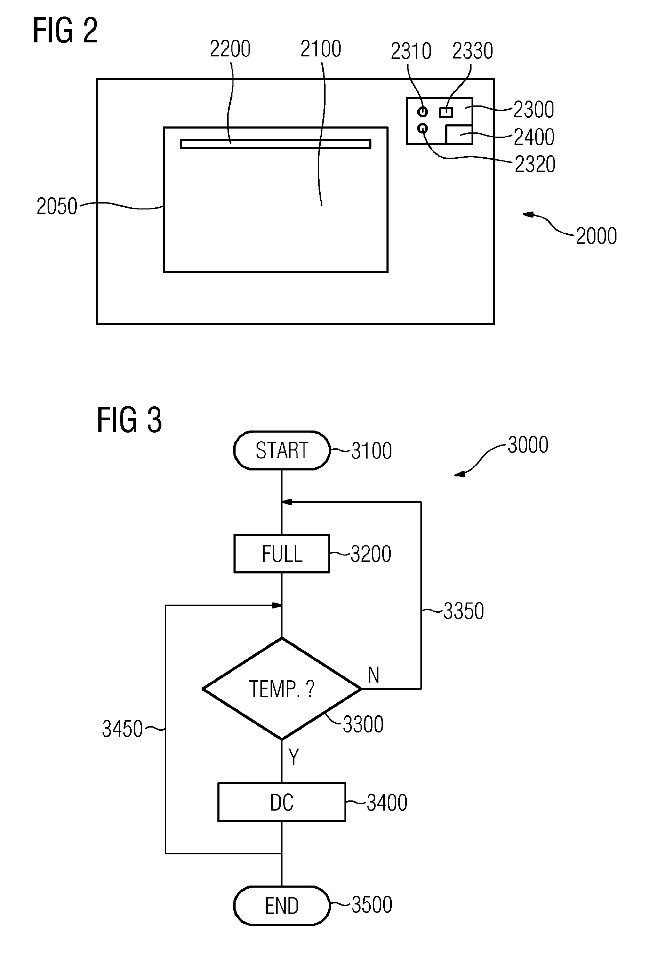

Once this preset temperature is reached, the thermal cut-out switch 1300 opens the electric circuit, and the second circular 1100 heater is disconnected from power. Advantageously, the thermal properties of the thermal cut-out switch are designed in such a fashion that it only reconnects the second circular heater 1100 once again room temperature has been established inside of the oven cavity. In this manner, the energy-saving properties of the domestic food oven can be exploited to a maximum extent. During the normal baking or cooking operation of the domestic food oven, only the first circular heater 1150 preferably is used. The power of the first circular heater 1150 is controlled by the power control 1200 that is also connected to the food mass determination unit 1255. A homogenous temperature distribution throughout the oven cavity 1500 is achieved by the fan 1140 that preferably is mounted to a wall 2050 shown in Fig. 2. By use of a convection fan it can be avoided that heat nests exist and it is ensured that throughout the oven the same temperature is maintained, which further promotes the energy efficiency of the domestic food oven. The food mass determination unit may receive information about the food mass to be heated inside of the oven cavity by way of a manual input that preferably uses keys already available at the domestic food oven, or it may automatically determines the food mass of the food to be heated by the use of e.g. a scale that is built into the oven cavity.

A further possibility would be to determine a reference behavior of the heat-up properties of the oven cavity 1500 under no-load conditions and store this behavior. This can then be compared with a behavior of the heat-up describing a temperature-over-time diagram under load. These two behaviors can be evaluated in order to determine the mass of the food to be heated. Beneficially, this is expressed in a gradient of the heat-up curve. In comparison to a predetermined fixed power value the gradient is ever becoming smaller, the higher the load inside of the domestic food oven gets. Beneficially, the food mass determination unit 1255 generates a control power value for the power control unit 1200 in order to provide the proper power control of the first circular heater 1150. This power may e.g. be controlled either by controlling the voltage or the current supplied to the first circular heater 1150. In this manner, an optimum flexibility in the circuit design is provided, while at the same time reliable components from the market can be selected that guarantee a long-term operation of a domestic food oven as expected by the customer.

The food mass determination unit is adapted to generate a control power value for the power control unit e.g. on the basis of a thermal inertia that is determined with e.g. a thermometer and a timer measuring the heat-up time of the oven under certain frame parameters. Such behavior may be determined for all domestic food ovens in production in advance and e.g. prestored in the food mass determination unit. It may comprise a table that is stored in a memory which stores certain frame parameters for an empty oven and the heat-up time for these frame parameters.

Further, it may comprise reference data in a memory for certain loads, e.g. 500 g, 1 kg, , 2 kg and so forth, and the associated heat-up time corresponding to a certain heat-up temperature. The frame parameters may be selected to conform to certain suitable cooking temperatures and typical food weights.

Generally, beneficially, the heating should be started at basically room temperature. The heat-up time in comparison to the heat-up time of an empty oven leads to a certain delay until a certain frame parameter temperature is reached which corresponds to the load that is present in form of a food to be heated in the oven. As such, e.g. the inclination angle of a temperature-over-time linear slope is indicative of the load present in the oven, e.g. in ovens present on the market, e.g. a heating capacity of 3 kW is present in form of electric heating elements in the oven. As such, if the load in the oven corresponds to a mass of 3 kg of food, then it has been found by the applicant this should go along with a heating power of 100%. On the other hand, due to thermal losses in form of radiation and conduction and convection, it is expected that a heating power corresponding to 1.5 kg of food inside the oven is not 50%, but rather 70%, and the one of 1 kg more close to 45%.

Advantageously, during a heat-up phase, the switch of the e.g. thermostat 1300 is closed and the first circular heater 1150 is directly connected to the power supply 1700, 1600. Later, once the heat-up temperature is reached, the power control unit 1200 becomes active and controls the power supply to the first circular heater 1150 with a power value corresponding to the load inside the oven as explained above.

Preferably the heat up temperature value may be e.g. a fixed value set as 180°C or e.g. as 160°C.

Further, e.g. the power control unit 1200 may mimic a simple temperature control element that safeguards a certain temperature range, in particular a certain upper temperature, under operation of the power control unit. Such a temperature control element may e.g. be behave like a capillary tube actuator that e.g. may serve as a controller that limits the upper temperature in order to prevent scorching of the food to be heated.
The temperature control element will e.g. only be activated once the heat-up switch 1300 has opened. Beneficially such a temperature control element maybe designed in hardware firmware or software.

As Fig. 2 shows, a household appliance 2000 in the form of a kitchen oven comprises a door closing a cooking cavity 2100 with a handle 2200. Also a wall 2050 of the oven cavity is depicted.

Further, a control panel is shown that comprises mass input means 2310, 2320 and an indication 2330. Further, a controller may be provided 2400, which may provide the food mass determination unit 1255. By means of the control panel, the user may activate a cooking program and may input a food mass by means of input keys 2310 and 2320. An indication may be given 2330 as to which temperature is currently present, if a preheat process is run, and e.g. as to which mass is detected inside of the oven, or how much power is supplied to the circular heater(s), e.g. 60%, giving the user an indication of how much power is saved with the household appliance.

The household appliance 2000 may contain a scale, not shown in the drawing. The scale may measure the weight of the food and provide the information to the food mass determination unit 1255. On the other hand, by means of a temperature sensor and a timer, the temperature-over-time behavior of the oven that is heated may be determined in order to determine a load that is present inside of the oven and control the power supply appropriately by the power control unit 1200.

Beneficially, a load corresponding to 3 kg corresponds to a power 100%, and a lower load corresponds to a lower power, e.g. a load of 1.5 kg does not correspond to a power of 50%, but rather to a power of 70% due to the non-linear behavior of the heater, thermal losses and thermal radiation and so forth.

Fig. 3 shows a preferred embodiment of a method according to the present invention 3000. Starting at 3100, the oven is heated with full power 3200. At 3300, an inquiry is performed as to which temperature is reached. In case the temperature is at the preset heat-up temperature, then, in the yes case, the power control is activated operating the first circular heater 1150 with a power that corresponds to the load inside of the oven.

This also means that the thermal cut out switch 1300 is open and the second circular heater 1100 consequently powerless. It is branched back in front of the inquiry 3450, where within a loop the temperature is controlled. Once the temperature is not satisfying a temperature criterion that is questioned inside of the inquiry 3300 it is branched back after the start 3350; and full heating power is activated. This branching back can either be done by closing the thermostatic control 1300, or by instructing the power control unit 1200 by means of the thermostat 1400 to heat at full capacity 100%, until the temperature has reached a predefined temperature again 3400and the power control unit 1200 can be adapted to further control the cooking process.

### List of reference numerals

- 1000: schematic oven
- 1600, 1700: power supply
- 1500: oven cavity
- 1100: second circular heater
- 1140: convection fan
- 1150: first circular heater
- 1200: power control unit
- 1300: thermostatic control
- 1255: mass determination unit

- 2000: kitchen oven
- 2050: wall of oven cavity
- 2100: cooking cavity
- 2200: handle
- 2300: control panel
- 2400: controller
- 2330: indication
- 2310, 2320: input keys

- 3000: method
- 3100: start
- 3200: full heating power
- 3300: temperature inquiry
- 3400: power control
- 3500: end
- 3450, 3350: branching back

## Claims

1. A domestic food oven (2000) with an oven cavity (2100) comprising a convection heating arrangement, wherein said convection heating arrangement comprises:
- a convection fan (1140) arranged on a wall of the oven cavity (2100),
- a first circular heater (1150) arranged around said convection fan (1140),
- a second circular heater (1100) arranged around said convection fan (1140),
- a thermostat (1400),
- a thermal cutout switch (1300),
- a food mass determination unit (1255),
- a power control unit (1200),
wherein the first circular heater (1150) and the second circular heater (1100) are connected in parallel, the thermal cutout switch (1300) is connected between the first circular heater (1150) and the second circular heater (1100) and is adapted to disconnect the second circular heater (1100) at a predetermined temperature, the thermostat (1400) is connected to the first circular heater (1150), the power control unit (1200) is connected to the first circular heater and is adapted to output power according to a a control power value supplied by the mass determination unit (1255) according to the mass of a food stuff that shall be heated in the oven cavity (2100).

2. The domestic food oven (2000) according to claim 1, wherein the thermal cutout switch (1300) is adapted to reconnect the second circular heater (1100), when the first circular (1100) heater and the second circular heater (1150) are disconnected from power (1600, 1700).

3. The domestic food oven (2000) according to any one of the previous claims, wherein the power control unit (1200) is adapted to control the supply voltage of the first circular heater (1150).

4. The domestic food oven (2000) according to any one of the claims 1 to 2, wherein the power control unit (1200) is adapted to control the current flowing through the first circular heater (1150).

5. The domestic food oven (2000) according to any one of the previous claims, wherein the food mass determination unit (1255) comprises a user-operable mass input for the food mass to be heated.

6. The domestic food oven (2000) according to any one of the claims 1 to 4, wherein the food mass determination unit (1255) comprises a scale.

7. The domestic food oven (2000) according to any one of the claims 1 to 4, wherein the food mass determination unit (1255) comprises means for automatically evaluating a thermal inertia of the food to be heated.

8. The domestic food oven (2000) according to any one of the previous claims, wherein the food mass determination unit (1255) is adapted to automatically provide a control power value in dependency of the food mass/ thermal inertia of the food.

9. The domestic food oven (2000) according to claim 8, wherein the food mass determination unit (1255) is adapted to automatically output a power control value corresponding to the food mass/ thermal inertia of the food to be heated.

10. A method (3000) for heating food in a domestic food oven with an oven cavity comprising a convection heating arrangement, wherein
- in a first step (3350) a preset temperature is established with two circular heaters (1100, 1150),
- in another step (3400) a second circular heater (1100) is switched off at the preset temperature,
- in a further step (3450), the first circular heater (1150) is subject to temperature and power control, wherein the power supplied to the first circular heater (1150) is dependent on the mass of the food to be heated.

11. The method (3000) according to claim 10, wherein the power supplied to the first circular heater (1150) is corresponding to the mass of the food to be heated.

12. The method (3000) for heating food according to any one of the claims 10 to 11, wherein the food is heated in a fan oven (2000).
